# EUROPÄISCHE PATENTSCHRIFT

(11) **EP 1 050 423 B1**
(45) Veröffentlichungstag und Bekanntmachung des Hinweises auf die Patenterteilung: **28.01.2004**
(21) Anmeldenummer: 00107957.3
(22) Anmeldetag: 17.04.2000
(51) Int. Cl.: B60K 15/05, B60K 15/04

(54) **Tankklappenmodul für ein Kraftfahrzeug**
Fuel tank inlet cover assembly for motor vehicles
Module de trappe d' obturation de réservoir pour véhicules à moteur

(30) Priorität: 06.05.1999 DE 19920843
(43) Veröffentlichungstag der Anmeldung: 08.11.2000
(73) Patentinhaber: Volkswagen Aktiengesellschaft, 38436 Wolfsburg (DE)
(72) Erfinder: Hacker, Roland, Dipl.-Ing., 38550 Isenbüttel (DE)

(56) Entgegenhaltungen:
- EP-A- 0 803 393
- EP-A- 0 858 922
- DE-A- 2 418 063
- DE-A- 19 746 236
- US-A- 4 573 694
- US-A- 5 165 749
- US-A- 5 735 322

## Beschreibung

Die Erfindung betrifft einen Tankklappenmodul gemäß dem Oberbegriff des Patentanspruchs 1.

Derartige Tankklappenmodule sind im praktischen Einsatz bei Kraftfahrzeugen verschiedener Hersteller. Sie haben den Vorteil eines einfachen, zuverlässigen Aufbaues und einer einfachen Montage. Auch ist die Tankklappe sicher in ihrer Schließlage gehalten, da sich ihr Schwenklager, also ein Scharnier, und der Rastbolzen diametral gegenüberliegen, der beispielsweise über einen Bowdenzug mit einer Handhabe in Verbindung steht, die ihn aus dem Bereich des tankklappenseitigen Ansatzes zu ziehen gestattet, wenn die Tankklappe geöffnet werden soll. Die Öffnungsbewegung der Tankklappe wird nach dieser Freigabe durch Zurückziehen des Rastbolzens zumindest initiiert durch eine im Bereich des Rastbolzens angeordnete Feder, die auf den besagten Ansatz im Sinne des Aufdrückens der Klappe wirkt und die bei geschlossener Tankklappe relativ stark zusammengedrückt wird. Wie sich gezeigt hat, arbeitet diese Konstruktion voll befriedigend, wenn für die Tankklappe ein relativ teures Material verwendet wird, das der Tankklappe eine hohe Steife auch bei unterschiedlichen Umwelteinflüssen (Feuchtigkeit, Temperatur) verleiht. Verwendet man jedoch eine relativ dünnwandige Tankklappe bzw. ein billigeres Material, so kann es vorkommen, daß sich die Tankklappe in ihrem geschlossenen Zustand gleichsam um eine senkrecht zur Verbindungslinie zwischen Schwenklager und Rastbolzen verlaufende Achse wölbt. Dadurch wird der optische Eindruck des Karosseriebereichs mit der Tankklappe verständlicherweise nachteilig beeinflußt.

Ein solcher Tankklappenmodul ist mit der EP 0 858 922 A1 offenbart, welcher seinerseits eine Öffnungsfeder (U-förmige Profilfeder) umfaßt, deren Kraft aufbringender Schenkel bei geschlossener Tankklappe in einem bestimmten Winkel schräg zum Verlauf des Rastbolzens (Arretierungsbolzens) angeordnet ist. Durch diese Anordnung des besagten Schenkels können jedoch aufgrund ungünstiger

Kräfteverhältnisse bei dünnwandigen Tankklappen noch nachteilige Beuleffekte in denselben erzeugt werden.

Der Erfindung liegt die Aufgabe zugrunde, einen gattungsgemäßen Tankklappenmodul unter Wahrung seiner günstigen Eigenschaften zu schaffen, bei dem auch bei Verwendung billiger, dünnwandiger Konstruktionen für die Tankklappe der beschriebene Beuleffekt vermieden ist.

Die erfindungsgemäße Lösung dieser Aufgabe besteht in den kennzeichnenden Merkmalen des Hauptanspruchs, vorteilhafte Aus- und Weiterbildungen der Erfindung beschreiben die Unteransprüche.

Der Erfindung liegt die Erkenntnis zugrunde, daß bei dem eingangs diskutierten Stand der Technik, bei dem die Basis des U der Profilfeder radial nach außen weist, die vektoriellen Kräfte, die von dem Rastbolzen und der besagten Profilfeder bei in Schließlage befindlicher Klappe auf den Ansatz an dieser ausgeübt werden, einen von Null verschiedenen Winkel einschließen, der z. B. etwa 5° bis 10° betragen mag, so daß auf den definierten Ansatz ein aus der Kräftedifferenz resultierendes Moment wirkt, das den beschriebenen Beuleffekt hervorrufen kann. Durch die erfindungsgemäßen Maßnahmen ist dagegen sichergestellt, daß die beiden Kraftvektoren im Idealfall einander überdecken, so daß keine Möglichkeit zur Entstehung eines derartigen Beulmoments auftritt.

Bei dem Stand der Technik enthalten die Mittel zur Verbindung des Topfes mit einem karosseriefesten Montageteil in bestechend einfacher Weise eine Schraube, die bei geöffneter Tankklappe von außen her eingeschraubt und im Bedarfsfall wieder gelöst werden kann. Der von der Schraube bislang eingenommene Platz ist bei der Erfindung durch die Profilfeder unzugänglich, so daß eine andere Verbindungsmöglichkeit zweckmäßig ist. Entsprechende Verbindungen beschreiben die Unteransprüche; diese Verbindungsmöglichkeiten lassen sich jedoch auch dann einsetzen, wenn ein anderer Ort für die Anbringung einer gegebenenfalls anders konstruierten Öffnungsfeder für die Tankklappe gewählt ist.

Im folgenden wird die Erfindung anhand der Zeichnung erläutert. In dieser zeigen
- Figur 1: zur Erläuterung des Problems einen Axialschnitt durch den bekannten Tankklappenmodul,
- Figur 2: einen entsprechenden Schnitt durch einen Tankklappenmodul, der nicht unter den Schutzbereich der Ansprüche fällt, sondern einen Schritt zur erfindungsgemäßen Lösung illustriert,
- die Figuren 3 und 4: verschiedene mögliche Verbindungsmittel zur Festlegung des Moduls an einem karosseriefesten Montageteil.

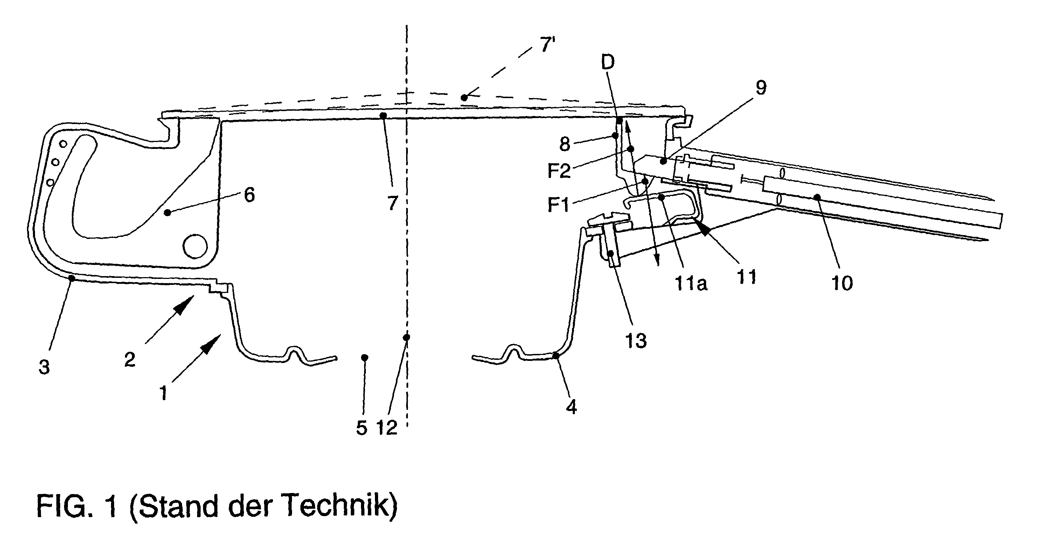

Betrachtet man zunächst Figur 1, so enthält der Tankklappenmodul 1 als wesentliche Bestandteile den Topf 2, der das starre Umfangsteil 3 und bodenseitig die Dichtung 4 umfaßt, die mit der Ausnehmung 5 zur Durchführung eines nicht dargestellten Tankfüllstutzens versehen ist. Beide Teile sind in an sich bekannter Weise dicht miteinander verbunden. Bei 6 erkennt man ein Scharnier als Schwenklagerung der Tankklappe 7, das ebenfalls an dem Topfteil 3 festgelegt ist. Dieses Topfteil 3 besteht also aus einem relativ steifen Material.

Die Tankklappe 7 trägt in der Figur nach unten, also nach innen, weisend den Ansatz 8, der hakenförmig ausgeführt ist und in der in Figur 1 angenommenen Schließlage der Tankklappe 7 von dem Rastbolzen 9 hintergriffen wird, so daß ein Öffnen der Tankklappe 7 nicht möglich ist. Ein Öffnen erfolgt vielmehr erst dann, wenn mittels einer allgemein mit 10 bezeichneten, beispielsweise einen Bowdenzug enthaltenden Betätigungseinrichtung der Rastbolzen 9 in Figur 1 nach rechts aus dem Bereich des Ansatzes 8 gezogen wird, so daß dieser freigegeben ist. Die Öffnungsbewegung wird dann initiiert durch die in Seitenansicht etwa U-förmige Profilfeder 11, die ebenfalls an dem Ansatz 8, jedoch in Figur 1 von unten her, angreift. Wie unmittelbar aus Figur 1 ersichtlich, ist die Profilfeder 11 bei in Schließlage befindlicher Tankklappe 7 relativ stark zusammengedrückt, so daß sie eine relativ große Kraft F2 über den Ansatz 8 auf den Rastbolzen 9 ausübt, die die Reaktionskraft F1 des Rastbolzens 9 - versetzt zu F2 - hervorruft, so daß auf den Ansatz 8 ein rechtsdrehendes Moment bezüglich des Punktes D ausgeübt wird. Dies kann zu dem Problem führen, daß die Tankklappe 7 etwa in die Konfiguration 7' verbeult oder verbogen wird.

Verständlicherweise ergibt sich eine derartige, ein unerwünschtes Biegemoment hervorrufende Kraft auch dann, wenn der Rastbolzen mit seiner Auflagefläche für den Ansatz 8 nicht schräg, sondern senkrecht zur Längsachse 12 verläuft, jedoch ist in dem hier vorausgesetzten Fall die Kraftdifferenz besonders groß.

Man könnte nun daran denken, durch geeignete Formgebung des die Kraft F2 ausübenden Schenkels 11a der Profilfeder 11 zu versuchen, die Kraft F2 zur Deckung zu bringen mit der Kraft F1. Dies ist jedoch in der Praxis kaum möglich, da der Schenkel 11a an der gewölbten Auflagefläche des Ansatzes 8 zu Beginn der Öffnungsbewegung der Klappe 7 (d.h. in der Darstellung der Figur 1 nach oben) sich gleichsam abwälzen muß.

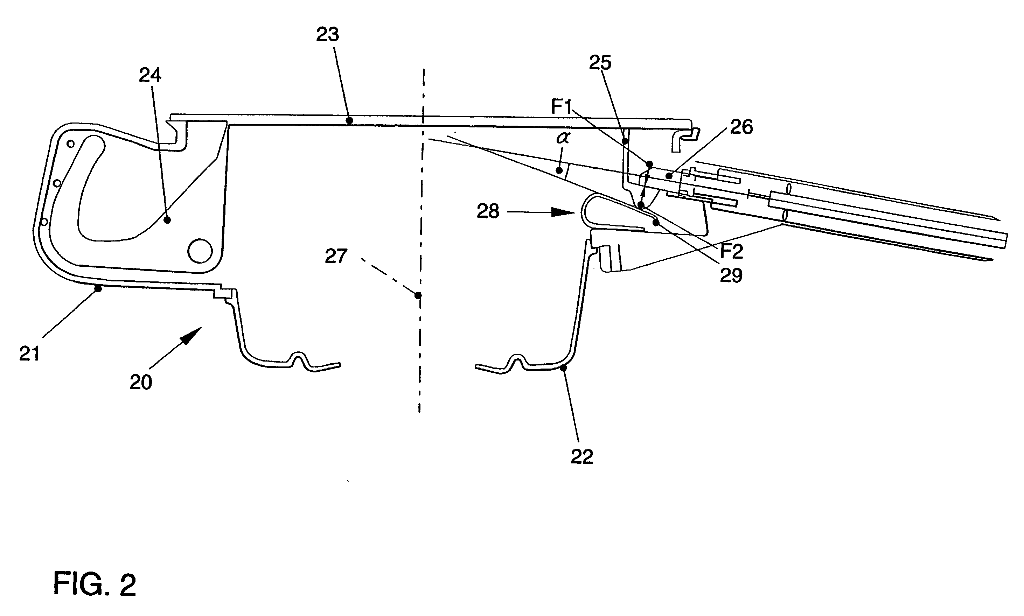

Der Ausgangsgedanke zur Lösung dieses Problems wird nun anhand Figur 2 erläutert:
Wiederum erkennt man einen Topf 20, zusammengesetzt aus dem starren Mantelteil 21 und dem elastischen Bodenteil 22. Auch hier ist der Deckel 23 schwenkbar mittels des Scharniers 24 an einer Seite des Topfes 20 gelagert, während sich der Ansatz 25 an der Tankklappe 23 zum Angriff des Rastbolzens 26 diametral gegenüber befindet. Die Achse des Tankklappenmoduls ist bei 27 angedeutet.

Von besonderem Interesse ist nun die Anordnung der wiederum etwa U-förmigen Profilfeder 28, die gleichsam als Öffnungsfeder über ihren Schenkel 29 auf den Ansatz 25 einwirkt. Sobald also der Rastbolzen 26 in Figur 2 nach rechts verschoben bzw. gezogen ist und den Ansatz 25 freigibt, sucht sich die Profilfeder 28 zu entspannen und übt auf den Ansatz 25 die Öffnungskraft F2 aus. Sobald aber der Rastbolzen 26 sich in seiner gezeichneten Arbeitsposition befindet, erzeugt er eine der Kraft F2 entgegenwirkende Kraft F1. In diesem Ausführungsbeispiel liegt nun die U-förmige Profilfeder 28 so, daß die Basis des U in Richtung auf die Längsachse 27 weist, also der Schenkel 29 bei in Schließlage befindlicher Tankklappe 23 derart schräg verläuft, daß er im Idealfall parallel zum Rastbolzen 26 oder genauer: parallel zu dessen Auflagefläche für den Ansatz 25 liegt und sich demgemäß die beiden Kräfte F1 und F2 überdecken. Eine ein störendes Biegemoment auf die Tankklappe 23 ausübende vektorielle Kraftdifferenz ist also auf einfache Weise vermieden.

In Figur 2 verläuft der Schenkel 29 nun noch unter Bildung eines mit seiner Spitze auf die Längsachse 27 weisenden spitzen Winkels α gegen den Rastbolzen 26. Das dadurch in die Klappe 23 eingeleitete Moment sucht deren in Figur 2 mittleren Bereich in der Figur nach unten zu wölben, was aber durch eine nicht gezeichnete Auflage für die Tankklappe 23 verhindert wird. Daher löst auch diese Ausführung die gestellte Aufgabe bereits, aber nicht in der Weise, wie es der Gegenstand des Anspruchs 1 gewährleistet.

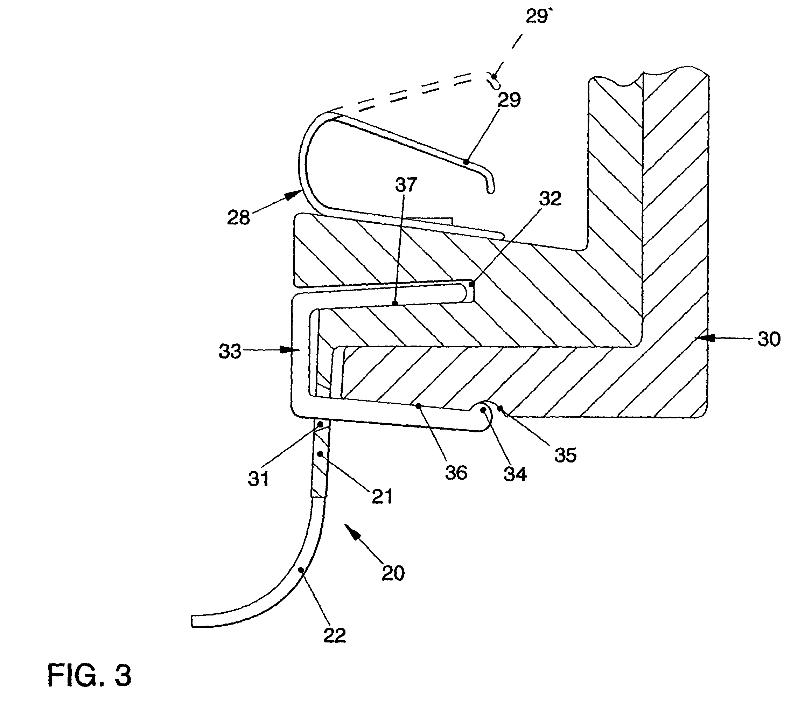

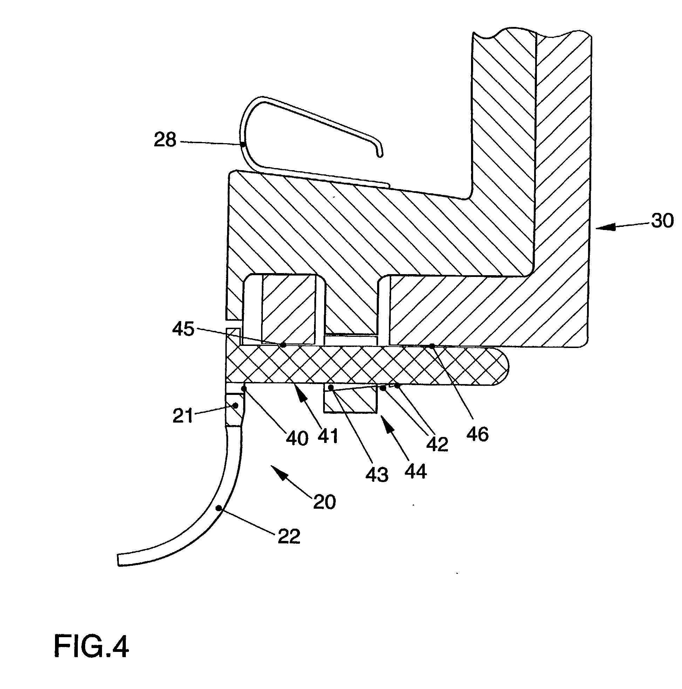

Wie man aus Figur 2 ersieht, ist der bei der bekannten Konstruktion nach Figur 1 vorhandene Platz für die dort mit 13 bezeichnete Befestigungsschraube jetzt durch die Feder 28 eingenommen. Um dennoch eine einfache Befestigungsmöglichkeit zu schaffen, sieht die Erfindung gemäß den Figuren 3 und 4 eine Clipsverbindung vor, die nach Öffnen der Tankklappe 23 von innen her leicht hergestellt werden kann.

Betrachtet man zunächst Figur 3, so erkennt man bei 20 wiederum den Topf mit den beiden Hauptbestandteilen 21 und 22. Der steife Topfbestandteil 21 wird in die das Montageteil 30 bildende Aufnahme eingesetzt, und dann wird durch Ausnehmungen 31 und 32 in dem steifen Topfteil 21 die Federklammer 33 eingesetzt, deren in der Figur unterer Schenkel die Rastnase 34 trägt, mit der er elastisch in die Rastausnehmung 35 des Montageteils 30 einrastet. Zur Erleichterung der Einsetzbewegung ist der Montageteil 30 bei 36 und der Topfteil 21 bei 37 mit Gleitflächen versehen.

Wie ohne weiteres ersichtlich, erfordert diese Verbindung keinerlei Platz im Bereich der Profilfeder 28, deren kraftausübender Schenkel in dieser Figur bei 29 in seiner komprimierten Lage bei geschlossener Tankklappe und bei 29' in seiner entspannten Lage bei geöffneter Tankklappe dargestellt ist.

In dem Ausführungsbeispiel nach Figur 4 weist das starre Topfteil eine erste Ausnehmung 40 auf, die zur Herstellung der Verbindung mit einem Stift 41 dient, der auf einer Seite mit Zähnen 42 bestückt ist. Nach dem Einsetzen des starren Topfteils 21 in das aufnahmeartige Montageteil 30 wird der Stift 41 von links her durch die zweite Ausnehmung 43 in dem Ansatz 44 des steifen Topfteils 21 hindurchgefädelt, so daß zumindest einer der Zähne 42 den Ansatz 44 hintergreifen und ein Herausrutschen des Stifts 41 in Figur 4 nach links verhindern kann. Bei diesem Einsetzvorgang wird der Stift 41 längs Gleitflächen 45 und 46 des Montageteils 30 geführt.

Mit der Erfindung ist durch die auf einfache Weise realisiebare parallele Ausrichtung des Federschenkels demgemäß mit einfachen Maßnahmen eine auch im Dauerbetrieb besonders zuverlässige Lösung der gestellten Aufgabe geschaffen; darüber hinaus ist eine ohne Werkzeuge herstellbare Verbindungsmöglichkeit zwischen dem Topf und dem Montageteil realisiert.

## Patentansprüche

1. Tankklappenmodul für ein Kraftfahrzeug mit einem bodenseitig zur Durchführung eines Tankfüllstutzens eingerichteten Topf (20), der auf sich etwa diametral gegenüberliegenden Seiten einerseits ein Schwenklager (24) für die Tankklappe (23) trägt und andererseits mit Mitteln zur Befestigung an einem karosseriefesten Montageteil sowie mit einer im wesentlichen U-förmigen Profilfeder (28) versehen ist, die mit einem Schenkel (29) des U auf einen an der Tankklappe (23) vorgesehenen Ansatz (25) ein diese in Öffnungsrichtung beaufschlagendes Moment ausübt, der bei geschlossener Tankklappe (23) von einem dann ein Gegenmoment ausübenden Rastbolzen (26) hintergriffen ist, und wobei die im wesentlichen U-förmige Profilfeder (28) mit der Basis des U zur Längsachse (27) des Topfes (20) weisend angeordnet ist **dadurch gekennzeichnet, daß** der eine Schenkel (29) der U-förmigen Profilfeder (28) bei geschlossener Tankklappe (23) parallel zum Verlauf des Rastbolzens (26) an dem Ansatz (25) gerichtet ist.

2. Modul nach Anspruch 1, **dadurch gekennzeichnet, daß** die Mittel zur Befestigung des Topfes (20) einen einen Mantelbereich (21) desselben von seiner Innenseite her durchsetzenden Clip (33) sowie am Montageteil (30) eine Rast (35) für diesen enthalten.

3. Modul nach Anspruch 2, **dadurch gekennzeichnet, daß** der Clip eine Federklammer (33) mit zwei Schenkeln ist, von denen einer in eine topfseitige Ausnehmung (32) und der andere mit einer Rastnase (34) in eine montageteilseitige Rastvertiefung (35) eingreift.

4. Modul nach Anspruch 2, **dadurch gekennzeichnet, daß** der Clip ein mit zumindest einer Rastnase (42) versehener Stift (41) ist, der einen die Rastnase (42) arretierend hintergreifenden Fortsatz (44) am Topf (20) durchsetzt und durch wenigstens eine Gleitfläche (46) am Montageteil (30) gesichert ist.

## Claims

1. Fuel-tank flap module for a motor vehicle, having a cup (20) which is set up on the bottom side for the passage of a fuel-tank filler nozzle and, on approximately diametrically opposite sides, bears, on one side, a pivot bearing (24) for the fuel-tank flap (23) and is provided, on the other side, with means for securing it on an installation part fixed on the bodywork and with an essentially U-shaped prof iled spring (28) which uses one limb (29) of the U to exert on a projection (25), which is provided on the fuel-tank flap (23), a torque which acts upon the flap in the opening direction, said projection, when the fuel-tank flap (23) is closed, being gripped from behind by a latching bolt (26) which then exerts a countertorque, and the essentially U-shaped profiled spring (28) being arranged with the base of the U pointing towards the longitudinal axis (27) of the cup (20), **characterized in that**, when the fuel-tank flap (23) is closed, the one limb (29) of the U-shaped profiled spring (28) is directed parallel to the profile of the latching bolt (26) on the projection (25).

2. Module according to Claim 1, **characterized in that** the means for securing the cup (20) contain a clip (33) which passes through a circumferential region (21) of the said cup from its inside, and a latch (35) for the said clip on the installation part (30).

3. Module according to Claim 2, **characterized in that** the clip is a spring clip (33) with two limbs, one of which engages in a recess (32) on the cup and the other of which engages with a latching lug (34) in a latching depression (35) on the installation part.

4. Module according to Claim 2, **characterized in that** the clip is a pin (41), which is provided with at least one latching lug (42), passes through an extension (44) on the cup (20), which extension engages behind the latching lug (42) in a locking manner, and is secured by at least one sliding surface (46) on the installation part (30).

## Revendications

1. Module de trappe d'obturation de réservoir pour un véhicule automobile, comprenant un pot (20) prévu du côté du fond pour réaliser une tubulure de remplissage du réservoir, lequel porte, sur des côtés approximativement diamétralement opposés, d'une part un appui pivotant (24) pour la trappe d'obturation de réservoir (23) et d'autre part est pourvu de moyens de fixation sur une pièce de montage fixée à la carrosserie ainsi que d'un ressort profilé (28) essentiellement en forme de U, qui exerce, avec une branche (29) du U, sur une saillie (25) prévue sur la trappe d'obturation de réservoir (23), un couple sollicitant celle-ci dans la direction d'ouverture, la saillie étant engagée par l'arrière lorsque la trappe d'obturation de réservoir (23) est fermée, par un boulon d'encliquetage (26) exerçant alors d'un couple conjugué, et où le ressort profilé (28) essentiellement en forme de U est disposé avec la base du U tournée vers l'axe longitudinal (27) du pot (20), **caractérisé en ce que** l'une des branches (29) du ressort profilé (28) en forme de U est orientée parallèlement à l'étendue du boulon d'encliquetage (26) sur la saillie (25) lorsque la trappe d'obturation de réservoir (23) est fermée.

2. Module selon la revendication 1, **caractérisé en ce que** les moyens de fixation du pot (20) comprennent un clip (33) traversant une région d'enveloppe (21) de celui-ci depuis son côté intérieur ainsi qu'un cliquet (35) sur la pièce de montage (30) pour celui-ci.

3. Module selon la revendication 2, **caractérisé en ce que** le clip est une pince à ressort (33) avec deux branches, dont l'une vient en prise dans un évidement (32) du côté du pot et l'autre vient en prise avec un nez d'encliquetage (34) dans un renfoncement d'encliquetage (35) du côté de la pièce de montage.

4. Module selon la revendication 2, **caractérisé en ce que** le clip est une tige (41) pourvue d'au moins un nez d'encliquetage (42), qui traverse une avancée (44) sur le pot (20) venant en prise par l'arrière avec le nez d'encliquetage (42) en le bloquant, et qui est fixé par au moins une surface de glissement (46) sur la pièce de montage (30).
